# EUROPÄISCHE PATENTSCHRIFT

(11) **EP 0 744 607 B1**
(45) Veröffentlichungstag und Bekanntmachung des Hinweises auf die Patenterteilung: **06.08.2003**
(21) Anmeldenummer: 96107555.3
(22) Anmeldetag: 11.05.1996
(51) Int. Cl.: G01M 13/02, G01B 5/20

(54) **Vorrichtung zum Messen der Zahnflankentopografie von Getriebeverzahnungen**
Device for measuring the topography of the tooth flanks of gear wheels
Dispositif de mesure de la topographie des flancs d'un ensemble d'engrenages

(30) Priorität: 26.05.1995 DE 19519429
(43) Veröffentlichungstag der Anmeldung: 27.11.1996
(73) Patentinhaber: Ford Global Technologies, Inc., Dearborn, Michigan 48126-2490 (US)
(72) Erfinder: Hopf, Guido, Dr., 40789 Monheim (DE); Faber, Werner, 50735 Köln (DE)
(74) Vertreter: Ritzkowsky, Harald, Dipl.-Ing.

(56) Entgegenhaltungen:
- EP-A- 0 325 688
- GB-A- 2 223 587
- US-A- 2 780 007

## Beschreibung

Die Erfindung bezieht sich auf eine Vorrichtung zum Messen der Zahnflankentopografie von Getriebeverzahnungen nach der Einflankenwälzprüfung gemäß dem Oberbegriff des Patentanspruches 1.

Bei Zahnradgetrieben hängt die Tragbildgröße und die Konstanz des Übersetzungsverhältnisses im Betrieb von der Form und der Lage der miteinander abwälzenden Zahnflanken ab. Beide Größen beeinflussen maßgeblich das Geräuschverhalten und die Tragfähigkeit des Getriebes. Aus diesem Grund ist es wichtig, den Prozeß der Verzahnungsherstellung so zu überwachen, daß Form und Lage der Zahnflanken, beschrieben durch die sogenannte Zahnflankentopografie eines jeden Zahnes, innerhalb enger Toleranzgrenzen konstant gehalten werden.

Zur Vermessung der Flankentopografie von Getriebeverzahnungen werden heute üblicherweise Zahnradprüfmaschinen verwendet, bei denen die Zahnflanke mit Hilfe eines Meßtasters in Profil- und Breitenrichtung jeweils linienförmig abgetastet wird. (Siehe DE-OS 19 26 165.) Diese Art der Messung ist sehr zeitaufwendig, zumal der Meßtaster in jede Zahnlücke neu eingefädelt werden muß. Sie beansprucht ein Vielfaches der Bearbeitungszeit. Eine direkte Überwachung und Regelung des Bearbeitungsprozesses auf der Basis derartiger Meßeinrichtungen ist daher nicht realisierbar.

Neben diesem Meßverfahren sind verschiedene Prüfverfahren bekannt, bei denen Verzahnungsmeßgrößen durch Abwälzen mit einem Gegenrad ermittelt werden.

Ein verbreitetes Verfahren ist die sogenannte Einflankenwälzprüfung nach DIN 3960 (siehe DE-PS 33 11 618). Hierbei werden zwei Zahnräder unter Einbaubedingungen miteinander abgewälzt, wobei entweder die Rechtsflanken oder die Linksflanken in ständigem Eingriff bleiben. Auf diesem Wege wird die Konstanz des Übersetzungsverhältnisses des Radpaares, d.h. der sogenannte Drehfehler der Verzahnung, geprüft. Man unterscheidet zwischen dem Abwälzen eines Prüflings mit einem Lehrzahnrad (Meisterrad) als Gegenrad und dem Abwälzen einer Werkradpaarung. In beiden Fällen entspricht das Gegenrad in seinen Abmessungen dem Gegenrad im Getriebe und der Achsabstand entspricht dem Betriebsachsabstand.

Problematisch ist, daß sich aus dieser Einflankenwälzprüfung aufgrund der Überdeckungsverhältnisse insbesondere bei Schrägverzahnungen keine Aussagen über die Zahnflankentopografie ableiten lassen. Aus dem gemessenen Wälzfehler ist nicht erkennbar, wo innerhalb der Eingriffsebene der Zahnkontakt stattgefunden hat. Dementsprechend ist es so auch nicht möglich, die Größe und die Lage des Tragbildes zu ermitteln bzw. den Einfluß von Einbaufehlern im Getriebe oder von Verformungseinflüssen unter Last abzuschätzen.

Aus der US-PS 2 780 007 ist eine Vorrichtung zum Messen der Zahnflankentopografie von Getriebeverzahnungen bekannt, die auf dem Prinzip der Einflankenwälzprüfung beruht und bei der zur Ermittlung spezifischer Fehlergrößen der Getriebeverzahnung ein Meister- oder Meßrad verwendet wird, das in seiner Verzahnung derart modifiziert ist, daß mit dem jeweils modifizierten Bereichen des Meßzahnrades nur jeweils ein spezifischer Verzahnungsfehler ermittelt werden kann.

Das Meister- oder Meßrad ist hierbei in eine Vielzahl von, z.B. drei, axial aufeinanderfolgend angeordnete spezielle Meßräder unterteilt, die aufeinanderfolgend mit dem zu prüfenden Zahnrad durch axiales Versetzen des Meßrades in Eingriff gebracht werden und mit diesem abwälzen, um jeweils die einzelnen spezifischen Verzahnungsfehler aufzuzeigen.

Die bekannte Vorrichtung weist hierbei den Nachteil auf, daß die Erfassung der unterschiedlichen Fehler nicht in einem Abwälzdurchgang erfolgen kann, sondern daß jeweils ein axiales Versetzen zwischen dem Meister- oder Meßrad und dem zu prüfenden Zahnrad vorgenommen werden muß.

Aus der US-PS 2 815 581 ist eine weitere Vorrichtung zum Messen der Zahnflankentopografie von Getriebeverzahnungen bekannt, die auf einer Zweiflankenwälzprüfung beruht und bei der durch die Anordnung eines gegenüber dem zu prüfenden Zahnrad wesentlich größeren Meister- oder Meßrades mit axial und radial gestaffelten Verzahnungssegmenten in einem Abwälzdurchgang die Erfassung der Verzahnungsfehler in unterschiedlichen axialen Bereichen an den Zahnflanken des zu prüfenden Zahnrades ermöglicht wird.

Die bekannte Vorrichtung weist den Nachteil auf, dass, da es sich hier um eine Zweiflankenwalzprüfung handelt, keine Aussage über Verzahnungsfehler einzelner Zahnflanken möglich ist.

EP-A-0 325 688 beschreibt eine Vorrichtung zum Messen der Zahnflankentopografie von Getriebeverzahnungen, wobei am Meßrad Meßzähne mit unterschiedlicher Ausbildung mit dem zu prüfenden Zahnrad in Eingriff kommen und der am zu prüfenden Zahnrad jeweils auftretende Drehfehlerverlauf aufgezeichnet wird. Das Meßrad ist an seinen Meßzähnen an den Eingriffzahnflanken soweit flächenmäßig abgetragen, dass erhabene radial verlaufende und axial versetzte sowie axial verlaufende und radial versetzte Meßspuren verbleiben und durch Zusammenführen der an den verschiedenen radialen und axialen Stellen aufgezeichneten Drehfehlerverläufe durch einen Mikroprozessor die Zahnflankentopografie ermittelt wird.

Die Aufgabe der vorliegenden Erfindung ist es, eine schnelle topologische Vermessung der Zahnflanken von gerade- oder schrägverzahnten Stirnrädern mit Innen- oder Außenverzahnungen zu ermöglichen, wobei in ihrer Grundform kompakte Meister- oder Meßräder verwendet werden, ohne dass axial aneinander gereihte Teilverzahnungen eine größere Breite oder durch axial und radial gestaffelte Verzahnungssegmente einen größeren Durchmesser des Meisterrades erfordern.

Gemäß der Erfindung wird diese Aufgabe gelöst, indem bei einer Vorrichtung zum Messen der Zahnflankentopografie von Getriebeverzahnungen gemäß dem Oberbegriff des Patentanspruches 1 die im Kennzeichen des Patentanspruches 1 aufgezeigten Maßnahmen angewendet werden.

In den weiteren Patentansprüchen 2 und 3 sind zweckmäßige Einzelheiten der Erfindung näher erläutert.

Dadurch, daß das Meßrad mit normaler Zahnbreite ausgebildet ist und an seiner Eingriffs-Zahnflanke in bestimmten Bereichen soweit flächenmäßig abgetragen ist, daß erhabene radiale Meßspuren in axial versetzter Anordnung und/oder erhabene axiale Meßspuren in radial versetzter Anordnung verbleiben und an aufeinanderfolgenden Zähnen radiale Meßspuren in unterschiedlichen axialen Abständen und axiale Meßspuren in unterschiedlichen Höhenabständen angeordnet sind, kann mit einem mehrmaligen Umlauf des nur einen Meßzahnrades eine Vielzahl von Verzahnungsfehlern selektiv erfaßt werden, durch deren Zusammenführung mittels eines Mikroprozessors unmittelbar die erfaßte Zahnflankentopografie darstellbar wird.

Die unterschiedlichen radialen und axialen Meßspuren an den Eingriffs-Zahnflanken des Meßrades können hierbei in günstiger Weise, z.B. durch Laser-Auftragsschweißen oder aber durch Materialabtragung mittels topologischem Schleifen, Elektroerosion oder Ätzen bereitgestellt werden.

Bei Getriebeverzahnungen mit einer Überdeckung größer als 1 können die bekannten Vorrichtungen zum Messen der Zahnflankentopografie von Getriebeverzahnungen der im Oberbegriff des Patentanspruches 1 erläuterten Art nicht mehr aussagekräftig angewendet werden.

Eine weitere Aufgabe der Erfindung ist es daher, ein Meßrad vorzuschlagen, das auch bei Getriebeverzahnungen mit einer Überdeckung größer als 1 eine aussagekräftige Erfassung der Verzahnungsfehler ermöglicht.

Gemäß der Erfindung wird diese Aufgabe gelöst, indem an einem Meßrad neben Meßzähnen mit den entsprechenden radialen oder axialen Meßspuren auch sogenannte Stützzähne angeordnet werden, die so weit in ihrem Verzahnungseingriff zurückgenommen sind, daß sie die entsprechende Messung an den einzelnen Meßzähnen nicht beeinträchtigen.

Durch die beschriebene Gestaltung des Meßrades wird erreicht, daß der beim Abwälzen mit dem zu prüfenden Rad meßbare Drehfehlerverlauf eine direkte Aussage über die Topografien der Zahnflanken des geprüften Rades auf den betrachteten Meßspuren liefert. Bei drehwinkelabhängiger Aufzeichnung läßt sich der so gemessene Drehfehler über die Eingriffsverhältnisse direkt in örtliche Verzahnungsabweichungen umrechnen. Die Messung erfolgt dabei - wie bei den gängigen Verfahren der Einflankenwälzprüfung - während des kontinuierlichen Abwälzvorgangs. Bei Einhaltung der erfindungsgemäß festgelegten Bedingungen kann somit eine besonders schnelle Erfassung der topografischen Abweichungen bestimmter oder ggf. aller Zähne eines zu prüfenden Zahnrades erfolgen.

Die Genauigkeit des Meßrades bezüglich Rundlauf, Planlauf, Evolventenform und Zahnrichtungswinkelabweichung sollte natürlich der Meßaufgabe entsprechend sehr hoch gewählt werden. Das hier beschriebene Verfahren bietet allerdings auch die Möglichkeit, bestimmte Fehler des Meßrades durch eine Kalibriermessung zu ermitteln und diese bei der rechnerischen Auswertung der Ergebnisse zu eliminieren.

Um den Verschleiß des Meßrades im Produktionseinsatz und die dadurch verursachten Meßfehler möglichst gering zu halten, kann das Meßrad außerdem mit einer Verschleißschutzschicht (z.B. TiN oder TiCN) überzogen werden.

Das Erfassen der Zahnflankentopografie über der Zahnbreite des zu prüfenden Rades kann auf unterschiedliche Weise erfolgen. Es zeigt:
- Fig. 1: ein Konzept der schnellen Topografie-Prüfung, mittels eines axial verlagerbaren schmalen Meßrades;
- Fig. 2: ein zu prüfendes Zahnrad in Eingriff mit einem Meßrad mit radialen, an den einzelnen Zähnen axial versetzten Meßspuren;
- Fig. 3: ein zu prüfendes Zahnrad in Eingriff mit einem Meßrad mit axialen, an den einzelnen Zähnen radial versetzten Meßspuren;
- Fig. 4: ein zu prüfendes Zahnrad in Eingriff mit einem Meßrad mit an einer bestimmten Anzahl von aufeinanderfolgenden Zähnen unterschiedlich angeordneten radial und axial verlaufenden Meßspuren;
- Fig. 5: ein zu prüfendes Zahnrad in Eingriff mit einem Meßrad mit kurzen Stützzähnen mit Unterschnitt gegen Profilüberdeckung im Meßbereich und

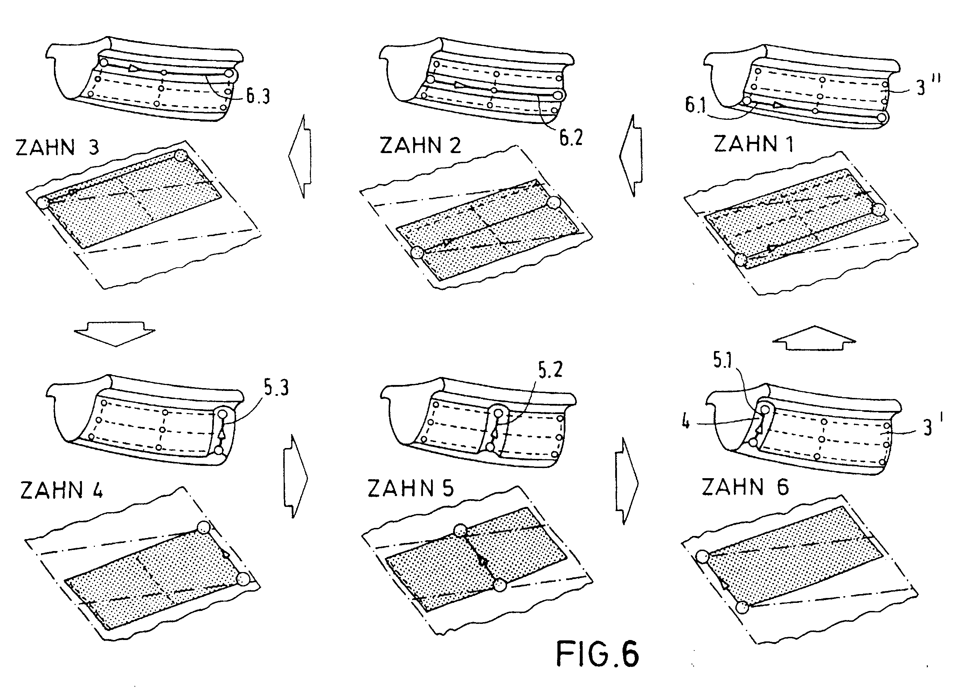

- Fig. 6: eine perspektivische Darstellung der aufeinanderfolgenden Zähne nach Fig. 4 mit der räumlichen Lage der Meßspuren an den Eingriffs-Zahnflanken.

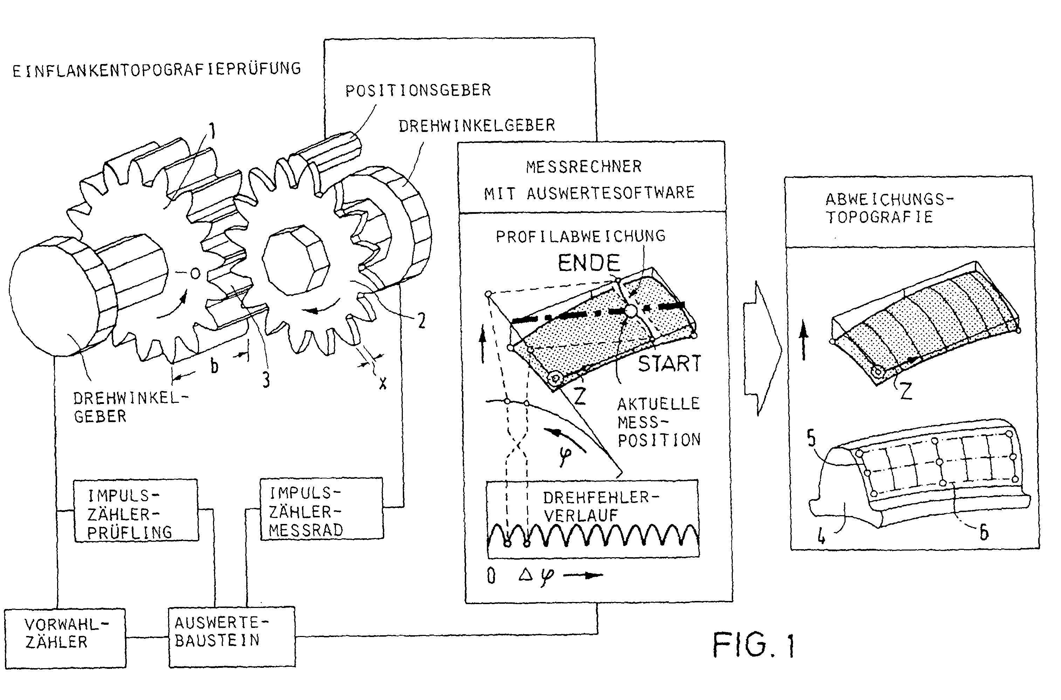

In Fig. 1 ist ein Konzept der schnellen Zahnflankentopografie-Prüfung gezeigt, bei dem ein zu prüfendes Zahnrad 1 von einer normalen Breite b mit einem Meßrad 2, dessen Breite x nur einen Bruchteil der Breite b des zu prüfenden Zahnrades 1 entspricht, um die Topografie der Zahnflanke 3 zu erfassen.

Soll die Topografie der Zahnflanke 3 voll erfaßt werden, so muß das Meßrad 2 entsprechend viele Umläufe in jeweils veränderten axialen Lagen ausführen, um ein die Abweichungstopografie aufzeigendes Gittersystem aufzuzeichnen. Dies wäre relativ zeitaufwendig.

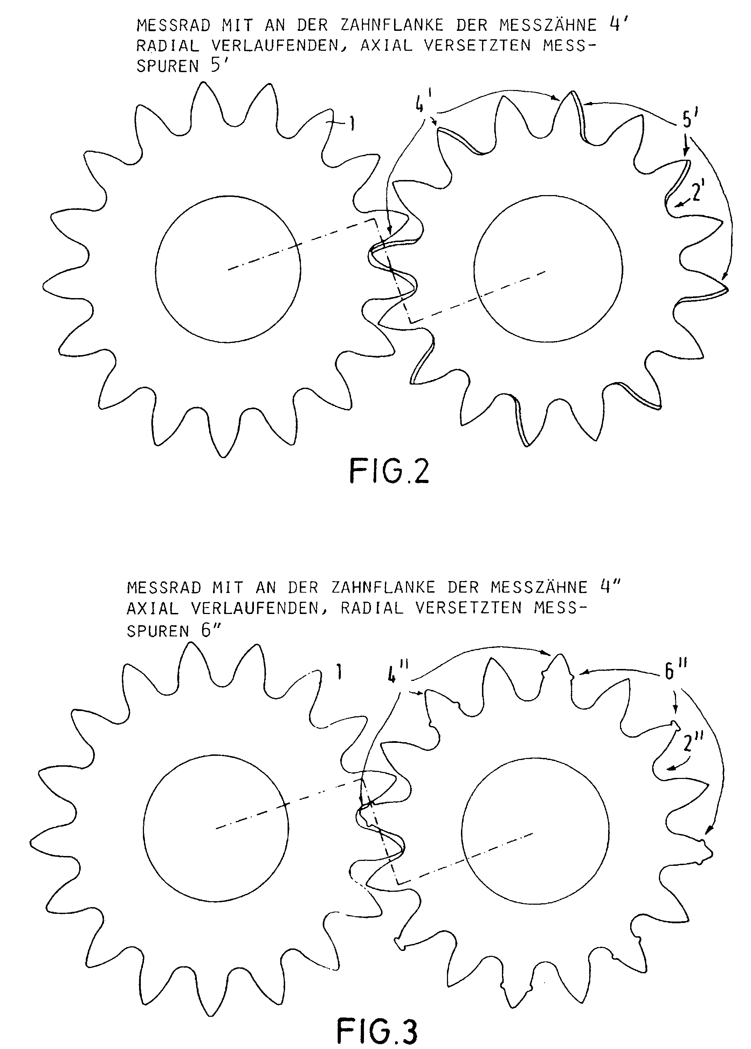

Bei der in Fig. 2 gezeigten Ausführungsform, kämmt ein zu prüfendes Zahnrad 1 mit einem Meßrad 2', das an seinen am Umfang verteilten Zähnen 4' mit in unterschiedlicher axialer Lage angeordneten radialen Meßspuren 5' versehen ist.

Bei der in Fig. 3 gezeigten Ausführungsform, kämmt ein zu prüfendes Zahnrad 1 mit einem Meßrad 2'', das an seinen am Umfang verteilten Zähnen 4'' mit in unterschiedlicher radialer Höhe angeordneten axialen Meßspuren 6'' versehen ist.

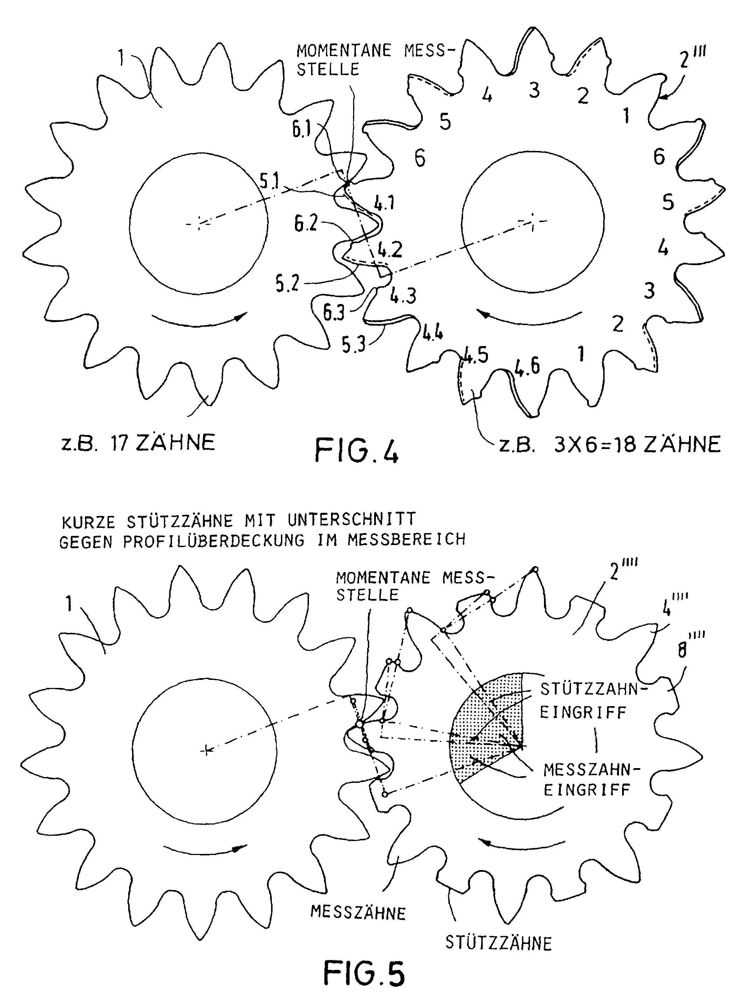

Bei der in Fig. 4 gezeigte Ausführungsform, kämmt ein zu prüfendes Zahnrad 1 mit einem Meßrad 2''', das die gleiche Breite, wie das zu prüfende Zahnrad 1 hat und das aufeinanderfolgende Meßzähne 4.1 bis 4.6 aufweist, die sich durch die auf die Eingriffsflanken aufgebrachten radialen bzw. axialen Meßspuren 5.1 bis 5.3 bzw. 6.1 bis 6.3 unterscheiden. Mit seinen unterschiedlichen radialen und axialen Meßspuren 5.1 bis 5.3 bzw. 6.1 bis 6.3 kommen bei jedem Drehwinkel unterschiedliche Meßspuren mit dem zu prüfenden Zahnrad 1 in Eingriff und die aufgezeicheten Drehwinkelabweichungen der radialen und axialen Meßspuren beschreiben die örtlichen Zahnflankenformabweichung der Zahnflanken des zu prüfenden Zahnrades. An den Zähnen 4.4 bis 4.6 ist hierbei angedeutet, daß die Meßspuren auch auf der anderen Zahnflanke entsprechend angeordnet werden können, um in einem Umlauf mit geänderter Drehrichtung auch die gegenüberliegenden Zahnflanken des zu prüfenden Zahnrades vermessen zu können. Eine Überprüfung der Gegenflanken ist auch bei gleicher Drehrichtung nur durch Wechsel der Belastungsrichtung möglich.

Im dargestellten Fall werden insgesamt sechs verschiedene Meßzähne 4.1 bis 4.6 verwendet, deren Meßspuren sich auf den Zahnflanken des zu prüfenden Rades z.T. kreuzen und die so eine umfassende topografische Beschreibung der Zahnflanken des zu prüfenden Rades innerhalb eines 3 x 3 Gitters liefern. Die Anzahl der Meßspuren und die Zähnezahl des Meßrades sind mit 3 x 6 = 18 Zähnen so auf das zu messende Zahnrad abgestimmt, daß dessen siebzehn Zähne bereits nach sechs Umdrehungen vollständig vermessen sind. Durch Messung eines Vielfachen dieser sechs Umdrehungen sowie durch eine auf die jeweilige Meßposition bezogene synchrone Mittelung der Einzelmeßwerte kann die Genauigkeit des Meßergebnisses noch weiter verbessert werden.

Die an den Zahnflanken der Meßräder angeordneten Meßspuren müssen nicht nur in radialer oder axialer Lage verlaufen. Es ist zur Überprüfung bestimmter Zahnflankenformen von Zahnrädern ebenso möglich, die Meßspuren schräg in einem bestimmten Winkel über die Zahnflanken der Meßzähne verlaufend anzuordnen.

## Patentansprüche

1. Vorrichtung zum Messen der Zahnflankentopografie von Getriebeverzahnungen nach der Einflankenwälzprüfung, bei dem ein zu prüfendes Zahnrad (1) unter der besonderen Bedingung, daß nur jeweils eine Zahnflanke (3) des zu prüfenden Zahnrades (1) in Eingriff mit einem Meßrad (2) abgewälzt wird und dabei der am zu prüfenden Zahnrad (1) auftretende Drehfehlerverlauf (Δφ) aufgezeichnet und ausgewertet wird, wobei am Meßrad (2) Meßzähne (4) mit unterschiedlicher Ausbildung mit dem zu prüfenden Zahnrad (1) in Eingriff kommen und der am zu prüfenden Zahnrad (1) jeweils auftretende Drehfehlerverlauf (Δφ) aufgezeichnet wird, wobei das Meßrad (2) an seinen Meßzähnen (4) an den Eingriffs-Zahnflanken soweit flächenmäßig abgetragen ist, daß unterschiedliche, erhabene, radial verlaufende und axial versetzte Meßspuren (5.1, 5.2, 5.3) sowie unterschiedliche, erhabene, axial verlaufende und radial versetzte Meßspuren (6.1, 6.2, 6.3) verbleiben und durch Zusammenführen der an den verschiedenen radialen und axialen Stellen aufgezeichneten Drehfehlerverläufe (Δφ) ducch einen Mikroprozessor die Zahnflankentopografie ermittelt wird, und wobei das Meßrad (2) in seiner Zähnezahl auf die Zähnezähl des zu prüfenden Zahnrades (1) derart ausgelegt ist, daß bei einem mehrmaligen Umlauf alle Zähne des zu prüfenden Zahnrades (1) mit den unterschiedlichen Meßspuren (5.1, 5.2., 5.3, 6.1, 6.2, 6.3) ah den verschiedenen Zähnen in Eingriff kommen
**dadurch gekennzeichnet, daß**
- an dem Meßrad (2) die Zähne mit unterschiedlichen radialen und axialen Meßspuren aufeinanderfolgen und damit eine Gruppe bilden und diese Gruppe mehrfach auf dem Meßrad (2) angeordnet ist.

2. Vorrichtung zum Messen der Zahnflankentopographie von Getriebeverzahnungen nach Anspruch 1,
dadurch gekenntzeichnet,daß
das Meßrad (2) an seinen Meßzähnen (4) an den Eingriffs-Zahnflanken statt axial oder radial verlaufender, erhabener Meßspuren schräg über die Zahnflanke verlaufende, erhabene Meßspuren aufweist.

3. Vorrichtung zum Messen der Zahnflankentopografie von Getriebeverzahnungen, nach einem der Ansprüche 1 oder 2,
**dadurch gekennzeichnet, daß**
- das Meßrad (2"") unterschiedliche Zähne, Meßzähne (4"") und Stützzähne (8"") aufweist, wobei die Meßzähne (4"") und Stützzähne (8"") so gestaltet sind, daß die einzelnen Meßzähne möglichst entlang ihrer gesamten erhabenen Meßspuren in Eingriff mit dem zu prüfenden Zahnrad (1) sind, ohne daß hierbei eine Beeinträchtigung durch Stützzähne oder andere Meßzähne erfolgt.

## Claims

1. The device for measuring the topography of tooth flanks of gear teeth according to the single-flank composite error test, in which a gearwheel (1) to be tested is tested under the particular condition that only one tooth flank (3) in each case of the gearwheel (1) to be tested is rolled in engagement with a measuring wheel (2) and in the process the rotational error profile (ΔΦ) occurring at the gearwheel (1) to be tested is plotted and evaluated, measuring teeth (4) of differing design on the measuring wheel (2) coming into engagement with the gearwheel (1) to be tested and the rotational error profile (ΔΦ) occurring in each case at the gearwheel (1) to be tested being plotted, the measuring wheel (2) being worn on the surface of its measuring teeth (4) against the engaging tooth flanks in such a manner that different, raised, radially running and axially offset measuring tracks (5.1, 5.2, 5.3) and different, raised, axially running and radially offset measuring tracks (6.1, 6.2, 6.3) remain, and the topography of the tooth flanks being determined by using a microprocessor to collate the rotational error profiles (ΔΦ) plotted at the various radial and axial points, and the measuring wheel (2) being configured in its number of teeth to match the number of teeth of the gearwheel (1) to be tested in such a manner that during a repeated rotation all of the teeth of the gearwheel (1) to be tested come into engagement with the different measuring tracks (5.1, 5.2, 5.3, 6.1, 6.2, 6.3) on different teeth,
**characterized in that**
- the teeth having different radial and axial measuring tracks follow one another on the measuring wheel (2) and thus form a group, and this group is arranged a number of times on the measuring wheel (2).

2. Device for measuring the topography of tooth flanks of gear teeth according to Claim 1,
**characterized in that**
the measuring wheel (2) has, on its measuring teeth (4) on the engaging tooth flanks, raised measuring tracks which run obliquely over the tooth flank instead of axially or radially running, raised measuring tracks.

3. Device for measuring the topography of the tooth flanks of gear teeth according to either of Claims 1 and 2,
**characterized in that**
the measuring wheel (2'''') has different teeth, measuring teeth (4'''') and supporting teeth (8''''), the measuring teeth (4'''') and supporting teeth (8'''') being designed in such a manner that the individual measuring teeth are in engagement so far as possible along their entire, raised measuring tracks with the gearwheel (1) to be tested without supporting teeth or other measuring teeth causing an adverse effect here.

## Revendications

1. Dispositif de mesure de la topographie des flancs des dents de dentures d'engrenages conformément à la vérification par roulement d'un seul flanc, dans lequel une roue dentée à vérifier (1) est vérifiée, à la condition particulière que seulement à chaque fois un flanc de dent (3) de la roue dentée à vérifier (1) soit roulé en prise avec une roue de mesure (2) et dans ce cas que l'allure des erreurs de façonnage (ΔΦ) se présentant sur la roue dentée à vérifier (1) soit indiquée et analysée, des dents de mesure (4) de conception différente, se trouvant sur la roue de mesure (2), venant en prise avec la roue dentée à vérifier (1) et l'allure des erreurs de façonnage (ΔΦ) se présentant à chaque fois sur la roue dentée à vérifier (1) étant indiquée, la roue de mesure (2) étant usée à plat avec ses dents de mesure (4) contre les flancs des dents en prise de telle sorte que des marques de mesure (5.1, 5.2, 5.3) différentes, rehaussées, s'étendant radialement et décalées axialement ainsi que des marques de mesure (6.1, 6.2, 6.3) différentes, rehaussées, s'étendant axialement et décalées radialement, subsistent, et par réunion des allures d'erreurs de façonnage (ΔΦ) indiquées aux divers emplacements radiaux et axiaux, la topographie des flancs des dents étant déterminée par un microprocesseur, et la roue de mesure (2) étant conçue avec son nombre de dents sur le nombre de dents de la roue dentée à vérifier (1) de telle sorte que pour une rotation multiple, toutes les dents de la roue dentée à vérifier (1) viennent en prise avec les marques de mesure différentes (5.1, 5.2, 5.3, 6.1, 6.2, 6.3) sur les différentes dents,
**caractérisé en ce que**
- les dents sur la roue de mesure (2) avec différentes marques de mesure radiales et axiales se succèdent et de ce fait forment un groupe et ce groupe est disposé plusieurs fois sur la roue de mesure (2).

2. Dispositif de mesure de la topographie des flancs des dents de dentures d'engrenages selon la revendication 1,
**caractérisé en ce que**
la roue de mesure (2) présente, sur ses dents de mesure (4), au niveau des flancs des dents en prise, au lieu de marques de mesure s'étendant axialement ou radialement, des marques de mesure rehaussées s'étendant obliquement sur les flancs des dents.

3. Dispositif de mesure de la topographie des flancs des dents de dentures d'engrenages selon l'une quelconque des revendications 1 ou 2,
**caractérisé en ce que**
- la roue de mesure (2'''') présente différentes dents, dents de mesure (4'''') et dents de support (8''''), les dents de mesure (4'''') et les dents de support (8'''') étant conçues de telle sorte que les dents de mesure individuelles soient en prise dans la mesure du possible le long de toutes leurs marques de mesure rehaussées avec la roue dentée à vérifier (1), sans qu'il en résulte pour autant un endommagement par des dents de support ou d'autres dents de mesure.
